# EUROPÄISCHE PATENTSCHRIFT

(11) **EP 0 599 873 B1**
(45) Veröffentlichungstag und Bekanntmachung des Hinweises auf die Patenterteilung: **25.10.1995**
(21) Anmeldenummer: 92916127.1
(22) Anmeldetag: 07.08.1992
(51) Int. Cl.: A47B 31/00, A47J 47/16

(54) **GESTELL ZUR DISTANZIERTEN AUFNAHME VON TELLERN**
RACK FOR SUPPORTING MUTUALLY SPACED-APART PLATES
CHASSIS DE SUPPORT D'ASSIETTES DES AUTRES ESPACEES LES UNES DES AUTRES

(30) Priorität: 08.08.1991 DE 4126315; 04.11.1991 DE 9113715 U
(43) Veröffentlichungstag der Anmeldung: 08.06.1994
(73) Patentinhaber: FUTSCHER & CO., H.U.W. HELD GESELLSCHAFT M.B.H. & CO. KG., A-6020 Innsbruck (AT)
(72) Erfinder: HELD, Hubert, A-6072 Lans (AT)
(74) Vertreter: Torggler, Paul, Dr.
(86) Internationale Anmeldenummer: AT9200112
(87) Internationale Veröffentlichungsnummer: WO9302593

(56) Entgegenhaltungen:
- CH-A- 290 155
- CH-A- 661 193
- FR-A- 2 597 741
- GB-A- 763 713

## Beschreibung

Die Erfindung betrifft ein Gestell zur distanzierten Aufnahme von Tellern in mindestens einem Stapel, mit Tellerauflagestäbe umfassenden Tragelementen, die von zumindest einer vertikalen Stütze getragen sind und für jeden Teller zwei untere Telleranlagebereiche bilden.

Derartige Tellergestelle dienen vor allem der Bereitstellung einer größeren Anzahl von kalten Speisen in Gastgewerbebetrieben. Bei einem aus der DE-U 89 14 138 bekannten Tellergestell sind an im Fünfeck angeordneten Rahmenstäben pro Tellerstapel zwei Tellertragrechen vorgesehen, die jeweils aus einer vertikalen Stütze und davon parallel zueinander auskragenden Tellerauflagestäbe bestehen. Der Abstand zwischen den Stützen ist auf die Tellergröße einstellbar. Jeder Tellerauflagestab ist mit einem rutschfesten Überzug versehen. Da die Teller üblicherweise einen geneigten Rand, die sogenannten Tellerfahne aufweisen, liegt der Teller damit nur an zwei Punkten auf und neigt zum Wackeln.

Dieselbe Zweipunktauflage ist auch beim Tellerständer nach der EP-A 373 127 gegeben, dessen Boden- und Deckrahmen jeweils vier in den Diagonalen eines Quadrates liegende Rahmenstäbe aufweisen. Jede der vier verstellbar fixierten Stützen trägt etwa L-förmig gebogene Tellerauflagestäbe, sodaß pro Tellerstapel zwei zueinander parallele Rechen zur Verfügung stehen.

Bei einem aus der FR-A 2 615 087 bekannten Tellergestell sind pro Tellerstapel drei Leitern im Dreieck angeordnet, sodaß jeder Teller auf drei Auflagestäben aufliegt. Die Auflage ist dadurch grundsätzlich wackelfrei, jedoch ist das Beschicken und die Entnahme schwierig, da die Teller durch die weitere Leiter durchgeschoben werden müssen.

Ein weiteres Tellergestell zeigt die EP-A 432 813, bei der an jeder Seite einer mehrseitigen Mittelstütze pro Teller zwei obere Stäbe und ein unterer Stab vorgesehen sind. Die Stäbe stehen nur wenig von der Mittelstütze ab und sind so angeordnet, daß die Tellerfahne dazwischen eingeschoben werden kann, die auf dem unteren Stab aufliegt und an den beiden oberen Stäben von unten anliegt. Der erzielte Halt ist durch die Einspannung gut, es besteht jedoch die Gefahr, daß die eingeklemmte Tellerfahne ausbricht. Weiters kann hier keine Tellerabdeckung vorgesehen werden. Je nach Dicke des Tellers hängt der Teller mehr oder minder schief.

Ziel der Erfindung ist nun eine wackelfreie Lage der gegebenenfalls auch abgedeckten Teller bei leichter Beschickung und Entnahmemöglichkeit. Weiters soll es möglich sein, die Auflagen für jeden Tellerstapel unabhängig einzustellen. Es wird weiters eine maximale Raumausnützung angestrebt.

Die wackelfreie Lage kann in einer ersten Ausführung des erfindungsgemäßen Tellergestells dadurch erreicht werden, daß für jeden Teller ein dritter unterer und ein vierter, oberer Telleranlagebereich an einem Gabelstück ausgebildet sind, das einen seitlich offenen Aufnahmeschlitz für den Tellerrand aufweist.

Bevorzugt sind für jeden Teller zwei zueinander parallele Tellerauflagestäbe vorgesehen. In bezug auf den Teller liegen die beiden unteren Telleranlagebereiche in diesem Fall diametral, wobei der dritte untere Telleranlagebereich des Gabelstückes ein Kippen des Tellers nach hinten, und der vierte obere Telleranlagebereich des Gabelstückes das Kippen des Tellers nach vorne ausschließt. Die Teller liegen daher mit dem Tellerrand in den Aufnahmeschlitz eingeschoben wackelfrei im Gestell.

Ist der Aufnahmeschlitz V-förmig, so werden auch verschieden dicke Tellerränder wackelfrei gehalten, wenn der Teller bis zum jeweiligen Anschlag in das Gabelstück eingeschoben wird. Bevorzugt ist das Gabelstück an einer die Stütze umschließenden und insbesondere höhenverschiebbaren Manschette angeordnet. Bei zwei parallelen Tellerauflagestäben ragt das Gabelstück in den Freiraum zwischen die beiden Tellerauflagestäbe. Kragt jeweils ein Tellerauflagestab von einer Stütze aus, sodaß also für den Tellerstapel zwei Auflagerechen, jeweils bestehend aus einer Stütze und einer Vielzahl von Auflagestäben vorgesehen sind, so ist vorzugsweise an jeder Stütze ein ein Gabelstück aufweisendes Tragelement angeordnet. Der Teller wird dann in beide Gabelstücke eingeschoben und liegt damit an sechs Anlagebereichen an. Kragt der Tellerauflagestab von der Stütze aus, können die Manschetten der Gabelstücke auf die Stütze aufgeschoben werden, bis diese am auskragenden Tellerauflagestab aufliegen.

In einer weiteren Ausführung sind für eine wackelfreie Lage vier untere Telleranlagebereiche an zwei zueinander parallelen Tellerauflagestäben vorgesehen, wobei jeder Tellerauflagestab zwischen den beiden Telleranlagebereichen einen tiefliegenden Mittelbereich aufweist. Hier verteilen sich die vier unteren Anlagebereiche etwa gleichmäßig rund um den Tellerschwerpunkt, sodaß ein oberer Gegenhalt gegen Kippen gegebenenfalls auch entfallen kann.

Eine bevorzugte Möglichkeit sieht Tellerauflagestäbe vor, an denen die Anlagebereiche an auf den Stäben verschiebbare Kunststoffringe oder dergleichen ausgebildet sein.

Ein tiefliegender Mittelbereich kann aber auch dadurch erzielt werden, daß jeder Tellerauflagestab im Mittelbereich muldenförmig ausgebogen ist, sodaß er durch Verdrehen um die Längsachse an die jeweilige Tellerform anpaßbar ist. Hiezu ist bevorzugt vorgesehen, daß jeder Tellerauflagestab an einem Ende mit einem Innengewinde versehen ist, in das eine die Stütze durchsetzende Schraube eingreift, sodaß er in verschiedenen Stellungen befestigt werden kann.

In einer weiteren Ausführung ist vorgesehen, daß zumindest ein Tellerauflagestab eine mittige Ausnehmung aufweist und auf einem Tellertragarm verschiebbar angeordnet ist, der von der Stütze absteht.

Eine maximale Raumausnützung läßt sich in einer weiteren Ausführung des Gestells erreichen, wenn es einen Bodenrahmen und einen Deckrahmen aufweist, an denen die vertikalen Stützen einzeln verschiebbar beidseitig einer gedachten Mittelebene des Gestells in zwei Reihen befestigt sind. Stützen und Tellerauflagestäbe bilden in dieser Ausführung pro Tellerstapel ein Paar von Tellertragrechen, wobei bevorzugt die Tellerauflagestäbe der einen Reihe entgegengesetzt zu denen der zweiten Reihe von den Stützen abstehen und sich insbesondere senkrecht zur gedachten Mittelebene erstrecken. Die beiden Reihen beiderseits der Mittelebene können nahe zueinander angeordnet werden, wobei die die Auflage von Tellern verschiedenen Durchmessers ermöglichende einzelne Abstandsverstellung gewährleistet bleibt. An jeder Seite kann ein Stapel angeordnet werden, wenn in den beiden Reihen jeweils zwei Stützen mit Tellerauflagestäben angeordnet sind. Sind auf jeder der beiden Seiten zwei Tellerstapel vorgesehen, ergibt sich eine annähernd quadratische Stellfläche. Weist das Gestell eine Rechteckform auf, können in jeder Reihe drei oder vier Stapel angeordnet werden. Bevorzugt sind dabei die Stützen auf den langen Rahmenstäben des Bodenrahmens und des Deckrahmens verschiebbar befestigt. Es ist aber auch möglich, die Stützen beider Reihen entlang eines einzigen Rahmenstabes anzuordnen, was gegebenenfalls zu einer geringfügigen Längenversetzung von Stapeln gleichen Durchmessers führen kann. Die Rahmenstäbe sind insbesondere durch Vierkantprofile und die Stützen durch Hohlprofile gebildet.

Eine Veränderung vorbereiteter Speisen läßt sich entweder durch Abdeckhauben für jeden Teller oder in einer weiteren Ausführung des Gestells dadurch verhindern, daß es eine die Tellerstapel einschließende Umhüllung aus Isolierplatten aufweist, deren zur Mittelebene parallele Wandteile Türen bilden.

Nachfolgend wird nun die Erfindung anhand der Figuren der beiliegenden Zeichnungen näher beschrieben, ohne darauf beschränkt zu sein. Es zeigen:
- Fig. 1: eine schematische Seitenansicht eines Tellergestelles,
- Fig. 2: eine Tellerauflage einer ersten Ausführung in Vorderansicht,
- Fig. 3: die Tellerauflage der ersten Ausführung in Seitenansicht,
- Fig. 4: die Tellerauflage der ersten Ausführung in Draufsicht,
- Fig. 5: eine Tellerauflage einer zweiten Ausführung in Vorderansicht,
- Fig. 6: die Tellerauflage der zweiten Ausführung in Seitenansicht,
- Fig. 7: eine Tellerauflage einer dritten Ausführung in Vorderansicht,
- Fig. 8: die Tellerauflage der dritten Ausführung in Seitenansicht und
- Fig. 9: die Tellerauflage der dritten Ausführung in Draufsicht,
- Fig. 10: eine Tellerauflage einer vierten Ausführung in Vorderansicht, und
- Fig. 11 und 12: eine Verbindung zwischen einer Stütze und einem oberen Rahmenstab, in fixierter und in gelöster Stellung.

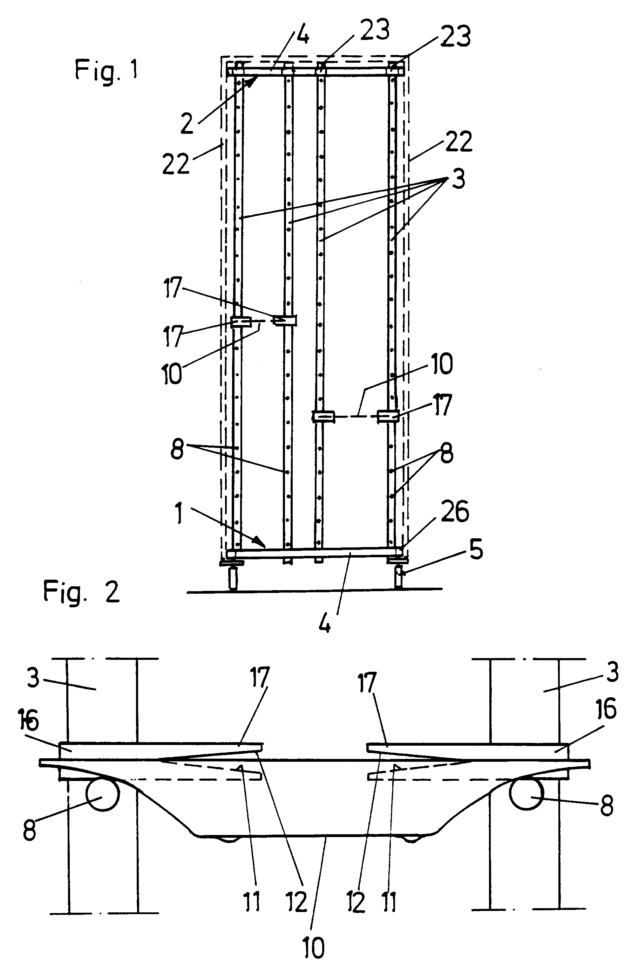

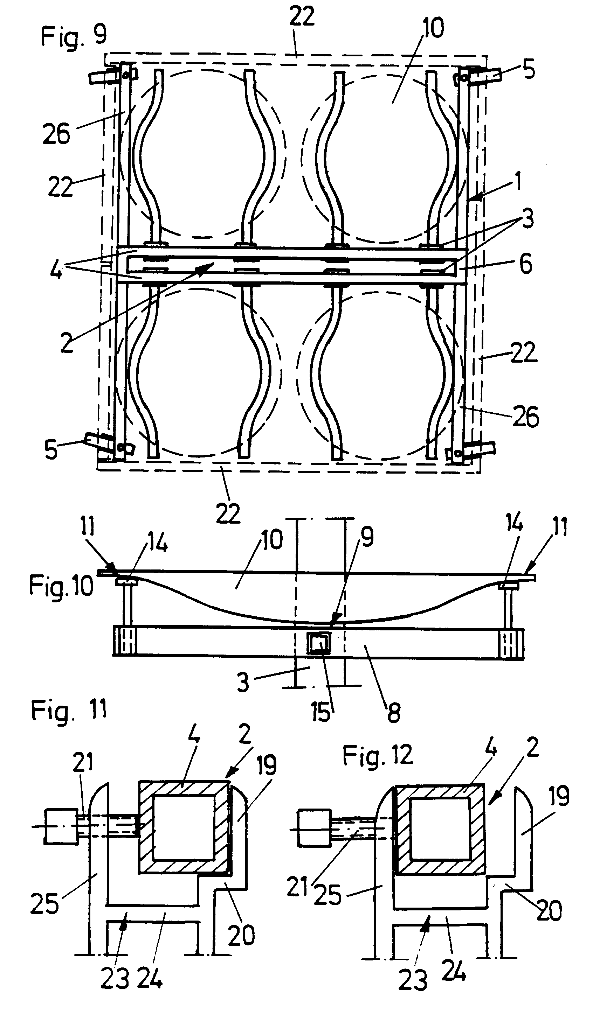

Ein Tellerständer weist einen mit Rollen 5 versehenen Bodenrahmen 1, einen Deckrahmen 2 und die beiden Rahmen 1,2 verbindende Stützen 3 auf. Er dient zur Aufnahme von zwei oder mehr Stapeln von Tellern gleicher oder unterschiedlicher Durchmesser zu beiden Seiten einer gedachten Mittelebene. Der Bodenrahmen 1 und der Deckrahmen 2 sind aus Vierkantprofilstäben 4, 6 zusammengesetzt und weisen jeweils die Form eines schmalen Rechtecks auf, wie die Draufsicht in Fig. 9 zeigt. In den Ausführungen nach den Fig. 1 bis 8 stehen von jeder Stütze 3 eine Reihe von zueinander parallelen Tellertragstäben 8 ab, die beispielsweise mittels Bohrungen der Stützen durchsetzende Schrauben 7 verdrehbar fixiert sind. Zwei mit Tellertragstäben 8 bestückte Stützen 8 bilden distanzierte Auflagen für einen Stapel von Tellern 10, die beispielsweise mit vorbereiteten, kalten Speisen belegt sind. Um diese Teller 10 wackelfrei zu halten, sind für jeden Teller zumindest untere, vorzugsweise auch obere Telleranlagebereiche 11,12 vorgesehen, sodaß in jedem Fall eine Dreipunkthalterung jedes Tellers 10 gegeben ist.

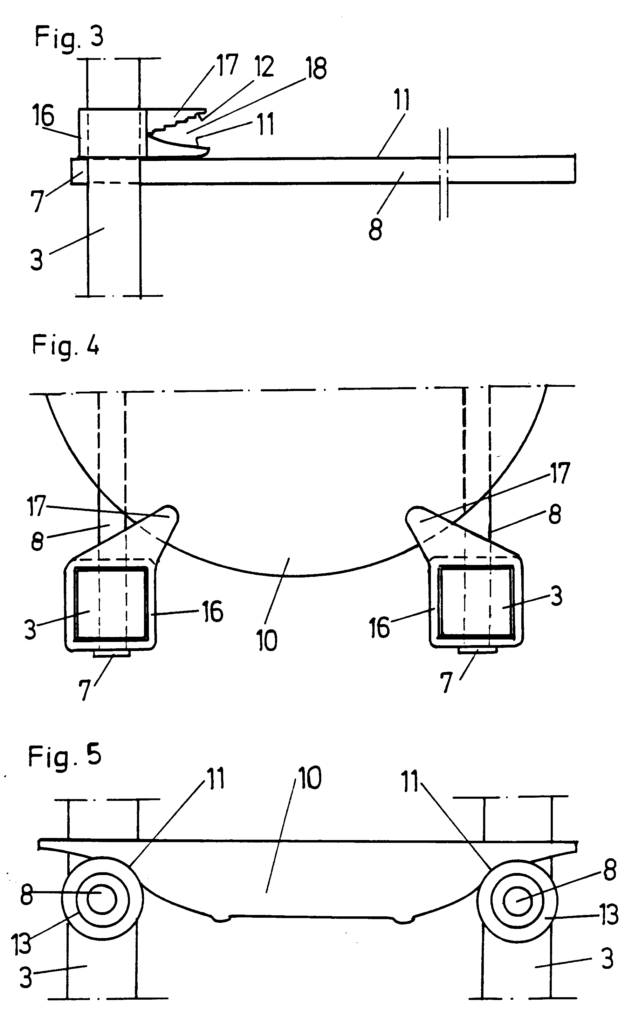

In der im Detail in Fig. 2 bis 4 gezeigten ersten Ausführung sind zusätzlich zu den beiden im unteren Anlagebereich 11 aufweisenden Tellerauflagestäben 8 pro Teller zwei weitere Tragelemente in Form von Gabelstücken 17 vorgesehen, die von die Stützen umschließenden Manschetten 16 abstehen. Jedes Gabelstück 17 weist einen V-förmigen Aufnahmeschlitz 18 auf, in den der Rand des Tellers 10 eingeschoben ist. Die untere Seitenfläche des Aufnahmeschlitzes 18 bildet einen weiteren unteren Telleranlagebereich 11 und die obere Seitenfläche einen oberen Telleranlagebereich 12. Da der Teller auf den Tellerauflagestäben 8 auf einem Durchmesser aufliegt, ist seine Lage bedingt durch die gebogene Form labil und neigt zum Wackeln, sodaß die beiden weiteren Anlagebereiche 11,12 des Gabelstückes 17 den Teller 10 stabilisieren. Dies erfolgt unabhängig davon, nach welcher Seite durch die Belegung des Tellers 10 sein Schwerpunkt verlagert ist. An sich genügt pro Teller ein derartiges Gabelstück 17. Auch aus optischen Gründen sind jedoch zwei Gabelstücke 17 vorgesehen. Wie vor allem aus Fig. 4 ersichtlich ist, ragen die beiden Gabelstücke 17 etwa radial zum Teller 10 in den Freiraum zwischen die beiden parallelen Tellerauflagestäbe 8.

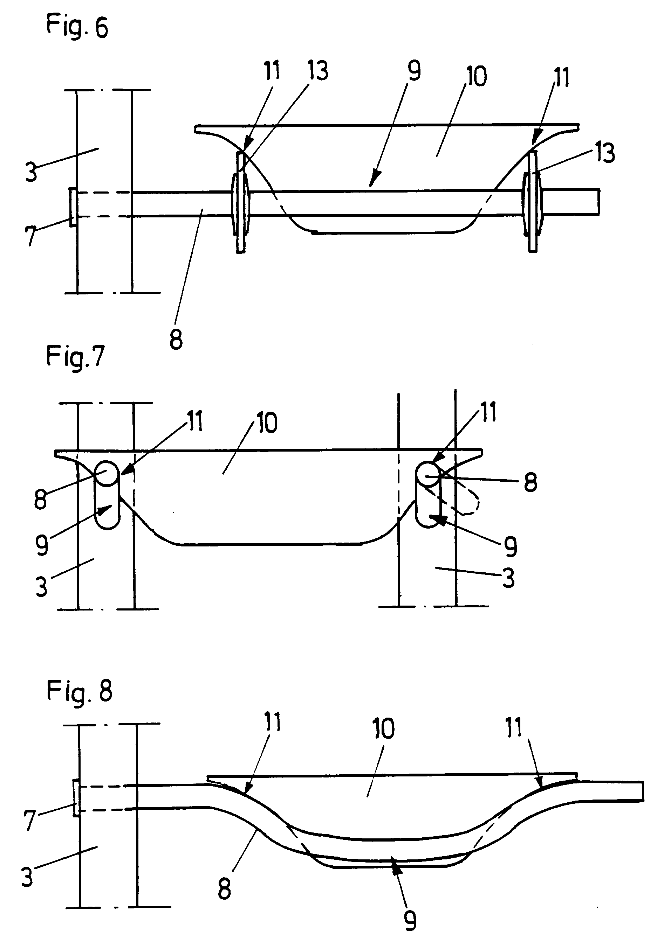

In der Ausführung nach Fig. 5 und 6 sind vier untere Anlagebereiche 11 vorgesehen, die an auf den beiden Tellerauflagestäben 8 verschiebbar angeordneten Ringen 13 ausgebildet sind. Auf diese Weise kann für jeden Teller bzw. jede Tellergröße die günstigste Auflage eingestellt werden. Durch die Anordnung der Ringe 13 sind die Anlagebereiche 11 vom Tellerauflagestab 8 distanziert, sodaß der Tellerauflagestab 8 in bezug auf die Anlagebereiche 11 einen vertieften Mittelbereich 9 aufweist. Der Teller liegt daher nur auf den vier Ringen 13 auf.

Ebenfalls ein vertiefter Mittelbereich 9 ist in der Ausführung nach Fig. 7 bis 9 gegeben, in der jeder Tellerauflagestab 8 zwischen den beiden unteren Anlagebereichen 11 muldenförmig durchgebogen ist. Der Tellerauflagestab 8 ist an der Stütze 3 durch die Schraube 7 gehalten und um seine Längsachse verdrehbar bzw. in verschiedenen Winkelstellungen verdrehfest fixierbar, wie in Fig. 7 rechts strichliert dargestellt. Entsprechende Rasten oder dergleichen an der Schraube 7, die mit Gegenelementen an der Stütze 3 zusammenwirken, können hiefür vorgesehen sein.

In der Ausführung nach Fig. 10 ist pro Tellerstapel nur eine Stütze 3 vorgesehen, von der ein Tragarm 15 auskragt, der beispielsweise ebenfalls durch eine Schraube fixiert ist. Auf dem Tragarm 15 sind zwei Tellerauflagestäbe 8 aufgeschoben, die jweils eine Durchbrechung aufweisen. Der Tragarm 15 und die Durchbrechung sind insbesondere unrund, sodaß eine zusätzliche Fixierung der Tellerauflagestäbe 8 entfällt. Untere Anlagebereiche 11 sind an stellschrauben 14 ausgebildet. Selbstverständlich könnten auch hier Ringe 13 vorgesehen werden. In dieser Ausführung kann auf den Tragarm 15 auch nur ein Tellerauflagestab 8 angeordnet werden, wobei die beiden weiteren Anlagebereiche ähnlich Fig. 2 bis 4 an einem Gabelstück 17 vorgesehen sind, das von der Stütze 3 mittig absteht.

Die vertikalen Abstände zwischen den einzelnen Tellerauflagestäben 8 sind so gewählt, daS Teller 10, auch mit nicht gezeigten Abdeckungen, bequem eingesetzt und entnommen werden können.

Fig. 9 zeigt eine annähernd quadratische Grundfläche, wenn vier Tellerstapel in zwei Reihen angeordnet sind. Der Abstand zwischen den beiden für jeden Tellerstapel vorgesehenen Stützen 3 läßt sich durch Versetzen zumindest einer der Stützen 3 entlang je eines langen Rahmenstabes 4 des Bodenrahmens 1 und des Deckrahmens 2 an den jeweiligen Tellerdurchmesser anpassen. In Verlängerung der kurzen Rahmenstäbe 6 des Bodenrahmens 1 erstrecken sich Stabstücke 26, an deren Enden die Schwenkrollen 5 und horizontale Abweisrollen vorgesehen sind, sodaß das Gestell bequem verfahrbar ist. Nicht gezeigte Griffe können zur leichteren Handhabung vorgesehen sein. Die Befüllung und Entnahme der Teller erfolgt von einander gegenüberliegenden Seiten, jeweils senkrecht zur gedachten Mittelebene, zwischen den längeren Rahmenstäben 4, sodaß das Gestell auch unter beschränkten Platzverhältnissen vorteilhaft einsetzbar ist, da nicht alle vier Seiten zugänglich sein müssen.

In Fig. 1 und 9 ist strichliert eine Umhüllung aus Isolierplatten 22 oder dergleichen eingezeichnet, die vom Bodenrahmen 1 und dessen die kürzeren Rahmenstäbe 6 verlängernden Stabstücken 26 getragen wird. Die isolierende Umhüllung weist an den beiden Befüll- bzw. Entnahmeseiten Türen auf.

Die Fixierung der als Hohlprofile ausgebildeten Stützen 3 an den unteren langen Rahmenstäben 4 erfolgt mittels C-förmiger Klemmen, die in die Hohlprofile eingesteckt werden. Jede Stütze 3 wird auf dem langen Rahmenstab 4 durch eine in die Klemme eingeschraubte, nicht gezeigte Klemmschraube in der gewünschten Lage fixiert. Selbstverständlich sind auch beliebige andere Klemmen denkbar, ebenso eine Fixierbarkeit in kleineren Abständen, beispielsweise durch Ausbildung von Lochreihen, usw.

Für die Fixierung an den langen Rahmenstäben 4 des Deckrahmens 2 ist eine Klemme 23 gemäß Fig. 11 und 12 ausgebildet. Die Klemme 23 weist einen mit einer Abstufung 20 versehenen Bodensteg 24 auf, von dem sich in die Stütze 3 einsteckbare Laschen nach unten erstrecken. Vom Bodensteg 24 stehen parallel zwei Seitenstege 25 und 19 hoch, wobei im Seitensteg 25 eine Klemmschraube 21 angeordnet ist. Wie Fig. 11 zeigt, liegt ein Rahmenstab 4 auf der Abstufung 20 auf und wird von der Klemmschraube 21 gegen den an die Stufe 20 anschließenden Seitensteg 19 gepreßt, wodurch die Stütze 3 am Rahmenstab 4 fixiert ist. Wird die Schraube 21 und die zur Stütze 3 gehörige untere Klemme gelöst, so kann die Klemme in die in Fig. 12 gezeigte Lage gedrückt werden, in der der Rahmenstab 4 nicht mehr auf der Abstufung 20 aufliegt. Die Stütze 3 ist somit ohne Klemme frei verschiebbar.

Erfindungsgemäße Tellergestelle für 4 Tellerstapel können bei einem Auflagestababstand von 8 cm und einer Höhe von ca. 1,85 m pro Stapel 20 Teller, also 80 Teller aufnehmen, die gegebenenfalls auch von einer die angerichteten Speisen schützenden, nicht gezeigten Haube überdeckt sind, und benötigen hiefür eine Stellfläche von etwa 0,4 m².

## Patentansprüche

1. Gestell zur distanzierten Aufnahme von Tellern in mindestens einem Stapel, mit Tellerauflagestäbe (8) umfassenden Tragelementen, die von zumindest einer vertikalen Stütze (3) getragen sind und die für jeden Teller (10) zwei untere Telleranlagebereiche (11) bilden, dadurch gekennzeichnet, daß für jeden Teller (10) ein dritter unterer (11) und ein vierter, oberer Telleranlagebereich (12) an einem Gabelstück (17) ausgebildet sind, das einen seitlich offenen Aufnahmeschlitz (18) für den Tellerrand aufweist.

2. Gestell nach Anspruch 1, dadurch gekennzeichnet, daß der Aufnahmeschlitz (18) V-förmig ausgebildet ist.

3. Gestell nach Anspruch 1 oder 2, dadurch gekennzeichnet, daß das Gabelstück (17) an einer die Stütze (3) umschließenden Manschette (16) angeordnet ist.

4. Gestell nach einem der Ansprüche 1 bis 3, dadurch gekennzeichnet, daß das Gabelstück (17) vertikal verschiebbar angeordnet ist.

5. Gestell, zur distanzierten Aufnahme von Tellern in mindestens einem Stapel, mit Tellerauflagestäbe (8) umfassenden Tragelementen, die von zumindest einer vertikalen Stütze (3) getragen sind und die für jeden Teller (10) zwei untere Telleranlagebereiche (11) bilden, dadurch gekennzeichnet, daß für jeden Teller (10) vier untere Telleranlagebereiche (11) an zwei zueinander parallelen Tellerauflagestäben (8) vorgesehen sind, wobei jeder Tellerauflagestab (8) zwischen den beiden Telleranlagebereichen (11) einen tiefliegenden Mittelbereich (9) aufweist.

6. Gestell nach Anspruch 5, dadurch gekennzeichnet, daß die Telleranlagebereiche (11) an auf den Tellerauflagestäben (8) verschiebbaren Ringen (13) vorgesehen sind.

7. Gestell nach Anspruch 5, dadurch gekennzeichnet, daß die Telleranlagebereiche (11) an an den Tellerauflagestäben angeordneten, höhenverstellbaren Schrauben (14) vorgesehen sind.

8. Gestell nach einem der Ansprüche 1 bis 7, dadurch gekennzeichnet, daß zumindest ein Tellerauflagestab (8) eine mittige Ausnehmung aufweist und auf einem Tellertragarm (15) verschiebbar angeordnet ist, der von der Stütze (3) absteht.

9. Gestell, insbesondere nach einem der Ansprüche 1 bis 8, dadurch gekennzeichnet, daß es einen Bodenrahmen (1) und einen Deckrahmen (2) aufweist, an denen die vertikalen Stützen (3) einzeln verschiebbar beidseitig einer gedachten Mittelebene des Gestells in zwei Reihen befestigt sind.

10. Gestell nach einem der Ansprüche 1 bis 9, dadurch gekennzeichnet, daß es eine die Tellerstapel einschließende Umhüllung aus Isolierplatten (22) aufweist, die zumindest an zwei Seiten mit Türen versehen ist.

## Claims

1. Rack for the spaced-apart positioning of plates in at least one stack, with support elements comprising plate support rods (8), being carried by at least one vertical support beam (3) and forming for each plate (10) two lower plate support regions (11), characterized in that for each plate (10) there are provided a third lower (11) and a fourth upper plate support region (12) at a forked piece (17) having a laterally open insertion slot (18) for the plate rim.

2. Rack according to claim 1, characterized in that the insertion slot (18) is V-shaped.

3. Rack according to one of claims 1 or 2, characterized in that the forked piece (17) is arranged at a collar (16) enclosing the support beam (3).

4. Rack according to one of claims 1 through 3, characterized in that the forked piece (17) is arranged to be vertically displaceable.

5. Rack for the spaced-apart positioning of plates in at least one stack, with support elements comprising plate support rods (8), being carried by at least one vertical support beam (3) and forming for each plate (10) two lower plate support regions (11), characterized in that for each plate (10) there are provided at two mutually parallel plate support rods (8) four lower plate support regions (11), each plate support rod (8) comprising a central region (9) lying deep between the two plate support regions (11).

6. Rack according to claim 5, characterized in that the plate support regions (11) are provided at rings (13) displaceably arranged on the plate support rods (8).

7. Rack according to claim 5, characterized in that the plate support regions (11) are provided at screws (14) height-adjustably arranged on the plate support rods.

8. Rack according to one of claims 1 through 7, characterized in that at least one plate support rod (8) has a central recess and is displaceably arranged on a plate supporting arm (15) which projects from the support beam (3).

9. Rack, in particular according to one of claims 1 through 8, characterized in that it comprises a bottom frame (1) and a top frame (2) to which the vertical support beams (3) are fastened in two rows, individually adjustable on both sides of an imaginary central plane of the rack.

10. Rack according to one of claims 1 through 9, characterized in that it comprises a casing of insulating panels (22) which has doors at least on two sides.

## Revendications

1. Châssis destiné à contenir des assiettes à un certain écartement mutuel en au moins une pile, comprenant des éléments porteurs qui comprennent eux-mêmes des barres (8) de support d'assiettes, et qui sont portés par au moins un montant vertical (3) et forment pour chaque assiette (10) deux régions inférieures (11) de contact avec les assiettes, caractérisé en ce que, pour chaque assiette (10), une troisième région inférieure (11) de contact avec les assiettes et une quatrième région supérieure (12) de contact avec les assiettes sont formées sur un élément (17) en forme de fourche, qui présente une fente réceptrice (18) ouverte latéralement pour le bord d'une assiette.

2. Châssis selon la revendication 1, caractérisé en ce que la fente réceptrice (18) est en forme de V.

3. Châssis selon la revendication 1 ou 2, caractérisé en ce que l'élément (17) en forme de fourche est agencé sur un manchon (16) qui entoure le montant (3).

4. Châssis selon une des revendications 1 à 3, caractérisé en ce que l'élément (17) en forme de fourche est monté coulissant verticalement.

5. Châsis destiné à contenir des assiettes à un certain écartement mutuel en au moins une pile, comprenant des éléments porteurs qui comprennent eux-mêmes des barres (8) de support d'assiettes, et qui sont portés par au moins un montant vertical (3) et forment pour chaque assiette (10) deux régions inférieures (11) de contact avec les assiettes, caractérisé en ce que, pour chaque assiette (10), quatre régions inférieures (11) de contact avec les assiettes sont prévues sur deux barres (8) de support d'assiettes parallèles entre elles, chaque barre (8) de support d'assiettes présentant une région centrale (9) surbaissée entre les deux régions (11) de contact avec les assiettes.

6. Châssis selon la revendication 5, caractérisé en ce que les régions (11) de contact avec les assiettes sont disposées sur des bagues (13) qui coulissent sur les barres (8) de support d'assiettes.

7. Châssis selon la revendication 5, caractérisé en ce que les régions (11) de contact avec les assiettes sont disposées sur des vis (14) réglables en hauteur, disposées sur les barres de support d'assiettes.

8. Châssis selon une des revendications 1 à 7, caractérisé en ce qu'au moins une barre (8) de support d'assiettes présente un évidement central et est montée coulissante sur un bras porte-assiette (15) qui fait saillie sur le montant (3).

9. Châssis, notamment selon une des revendications 1 à 8, caractérisé en ce qu'il présente un cadre de fond (1) et un cadre de plafond (2) auxquels les montants verticaux (3) sont fixés en deux rangées, de façon à pouvoir coulisser individuellement, de part et d'autre d'un plan médian fictif du châssis.

10. Châssis selon une des revendications 1 à 9, caractérisé en ce qu'il présente une enveloppe en panneaux isolants (22) qui renferme la pile d'assiettes et qui est munie de portes au moins sur deux côtés.
